# EUROPEAN PATENT SPECIFICATION

(11) **EP 2 412 437 B1**
(45) Date of publication and mention of the grant of the patent: **06.12.2017**
(21) Application number: 09842344.5
(22) Date of filing: 24.12.2009
(51) Int. Cl.: B01J 37/02, B01J 37/03, B01J 23/00, B01J 23/63, B01J 35/04, B01D 53/94, F01N 3/28

(54) **EXHAUST GAS PURIFYING CATALYST FOR SADDLE TYPE VEHICLE**
ABGASREINIGUNGSKATALYSATOR FÜR FAHRZEUG VOM SATTELTYP
CATALYSEUR DE PURIFICATION DE GAZ D'ÉCHAPPEMENT POUR VÉHICULE À SELLE

(30) Priority: 25.03.2009 JP 2009075238
(43) Date of publication of application: 01.02.2012
(73) Proprietor: Honda Motor Co., Ltd., Minato-ku Tokyo 107-8556 (JP); Mitsui Mining and Smelting Co., Ltd., Shinagawa-ku Tokyo 141-8584 (JP)
(72) Inventor: MASATANI Tadahisa, Wako-shi Saitama 351-0193 (JP); HORIMURA Hiroyuki, Wako-shi Saitama 351-0193 (JP); TSUJI Masateru, Wako-shi Saitama 351-0193 (JP); ITO Sadaaki, Wako-shi Saitama 351-0193 (JP); MITSUKAWA Makoto, Wako-shi Saitama 351-0193 (JP); MIYATA Hiroaki, Wako-shi Saitama 351-0193 (JP); CHAI Maorong, Ageo-shi Saitama 362-0025 (JP); KAWASAKI Mutsuro, Ageo-shi Saitama 362-0025 (JP); OHNO Daigo, Ageo-shi Saitama 362-0025 (JP)
(74) Representative: Dossmann, Gérard
(86) International application number: PCT/JP2009/071467
(87) International publication number: WO 2010/109734

(56) References cited:
- JP-A- 2006 263 581
- JP-A- 2006 263 582
- JP-A- 2007 275 704

## Description

### Technical Field

The present invention relates to an exhaust gas cleaning catalyst for a saddle-type vehicle. More particularly, the present invention relates to an exhaust gas cleaning catalyst for a saddle-type vehicle, which catalyst suppresses metallization of PdO (palladium oxide) serving as a catalyst component, to thereby suppress reduction of catalytic activity caused by sintering of Pd fine particles due to metallization of PdO, and thus catalytic activity is less likely to be lowered even when the catalyst is employed in an atmosphere of exhaust gas from a saddle-type vehicle, in which the concentration of oxygen, HC (hydrocarbons), or CO (carbon monoxide) changes drastically, and A/F window is very wide.

### Background Art

Exhaust gas discharged from an internal combustion engine of, for example, an automobile contains components such as HC, CO, and NOₓ (nitrogen oxides). Hitherto, ternary catalysts have been used for removing such components. Such a catalyst contains a noble metal as a main component. Particularly, a catalyst for a saddle-type vehicle (e.g., a motorcycle) generally contains a noble metal such as Pt or Rh.

Attempts have been made to reduce the cost required for an exhaust gas cleaning catalyst for a saddle-type vehicle by replacing Pt or Rh, as a main active component, with Pd, which is less expensive than Pt or Rh. As compared with the case of a catalyst containing Rh as a component, a catalyst containing Pd exhibits poor NOₓ reduction performance under lean conditions, and exhibits lowered catalytic activity under rich conditions as a result of sintering of Pd particles via reduction of PdO to metallic Pd by a reducing exhaust gas component. Thus, since Pd exhibits poor durability, Pd poses problems when used in a catalyst. In order to solve such a problem, there has been proposed a catalyst including two catalyst layers: an upper layer containing Rh or Rh + Pt as a catalyst component, and a lower layer containing Pd (see, for example, Patent Document 1 or 2). Such a conventional catalyst is intended to be used as a catalyst for a common four-wheel vehicle driven under stoichiometric to lean conditions, which is clear from the practice of the performance test of the catalyst being carried out in an exhaust system of a gasoline engine in which a fuel is combusted in a stoichiometric to lean atmosphere (A/F ≈ 15).

Another exhaust gas catalyst used in conveying machinery or machinery is described in JP 2007-275704. It comprises at least a support and multiple layers formed on the support, wherein at least one of the multiple layers has voids therein and comprises, as catalytic components, a noble metal, alumina, and one or more composite oxides comprising, as main components, ceria, zirconia and one or more rare earth elements except for ceria.

JP2006-263581 and JP2006-263582 disclose two-layered vehicle catalysts with mixed zirconia/cerium oxides and Pd or Rh as catalyst respectively. Lanthanium and Neodym are present in mixed oxides in the layers. Therefore such catalysts are not suitable as an exhaust gas cleaning catalyst for the saddle-type vehicle, which is frequently driven under rich conditions, and in which the A/F window is wider than in the case of a four-wheel vehicle.

### Prior Art Document

### Patent Document

Patent Document 1: Japanese Patent Application Laid-Open (*kokai*) No. 2009-000648
Patent Document 2: Japanese Patent Application Laid-Open (*kokai*) No. H10-296085

### Summary of the Invention

### Problems to be Solved by the Invention

In view of the foregoing, an object of the present invention is to provide an exhaust gas cleaning catalyst for a saddle-type vehicle, which catalyst suppresses metallization of PdO serving as a catalyst component, to thereby suppress reduction of catalytic activity caused by sintering of Pd fine particles due to metallization of PdO, and thus catalytic activity is less likely to be lowered even when the catalyst is employed in an atmosphere of exhaust gas from a saddle-type vehicle, in which the concentration of oxygen, HC, or CO changes drastically, and the A/F window is very wide.

### Means for Solving the Problems

In order to achieve the aforementioned object, the present inventors have conducted extensive studies, and as a result have found that when a catalyst is formed of two catalyst layers: a lower layer prepared by distributing metallic Pd or Pd oxide on a specific cerium-zirconium composite oxide material having high OSC performance wherein the mass of cerium oxide is greater than that of zirconium oxide; and an upper layer prepared by distributing Rh or (Rh + Pt) on a specific cerium-zirconium composite oxide material, reduction of PdO is suppressed upon change in the A/F, and the palladium-containing layer exhibits improved durability and stability. The present inventors have also found that when Nd (third element) and La (fourth element) are incorporated in the form of solid solution into such a cerium-zirconium composite oxide so that the thermal stability of cerium oxide (which generally exhibits poor thermal stability) is improved, and so that the composite oxide maintains high OSC performance, etc. even when exposed to exhaust gas from a saddle-type vehicle for a long period of time, the composite oxide exhibits improved OSC performance, and a catalyst formed by supporting a noble metal on the composite oxide (i.e., carrier) exhibits improved exhaust gas cleaning performance and durability, and therefore the catalyst can be employed in a saddle-type vehicle engine under so-called lean conditions and also under rich conditions (i.e., average air/fuel ratio (A/F) is 14.5 or less).

Accordingly, the present invention provides an exhaust gas cleaning catalyst for a saddle-type vehicle, characterized by comprising a support formed of a ceramic material or a metallic material; a first catalyst layer formed on a surface of the support; and a second catalyst layer formed on the first catalyst layer, wherein the first catalyst layer includes a carrier formed of a cerium-zirconium composite oxide having a CeO₂ content of 45 to 70 mass%, a ZrO₂ content of 20 to 45 mass%, an Nd₂O₃ content of 2 to 20 mass%, and an La₂O₃ content of 1 to 10 mass%, and a catalyst component which is supported on the carrier and contains metallic Pd or Pd oxide; and the second catalyst layer includes a carrier formed of a zirconium composite oxide having a ZrO₂ content of 50 to 95 mass%, a CeO₂ content of 0 to 40 mass%, an Nd₂O₃ content of 2 to 20 mass%, and an La₂O₃ content of 1 to 10 mass%, and a catalyst component which is supported on the carrier and contains metallic Rh or Rh oxide, or both metallic Rh or Rh oxide and metallic Pt or Pt oxide.

### Effects of the Invention

In the exhaust gas cleaning catalyst for a saddle-type vehicle of the present invention, in which a catalyst component (i.e., metallic Pd or Pd oxide) is supported on a specific carrier formed of a cerium-zirconium composite oxide having high OSC performance wherein the mass of cerium oxide is greater than that of zirconium oxide, metallization of PdO (catalyst component) is suppressed, and thus reduction of catalytic activity-which is caused by sintering of Pd fine particles due to metallization of PdO-is suppressed. Therefore, even when the exhaust gas cleaning catalyst is employed in an atmosphere of exhaust gas from a saddle-type vehicle, in which the concentration of oxygen, HC, or CO changes drastically, and the A/F window is very wide, the catalytic activity of the catalyst is less likely to be lowered. Thus, despite employing Pd, the exhaust gas cleaning catalyst for a saddle-type vehicle of the present invention exhibits improved durability and exhaust gas cleaning performance. Even when a saddle-type vehicle engine incorporating the exhaust gas cleaning catalyst is operated under rich conditions (i.e., average air/fuel ratio (A/F) is 14.5 or less), the catalyst can maintain its durability and exhaust gas cleaning performance.

### Brief Description of the Drawings

[Fig. 1]

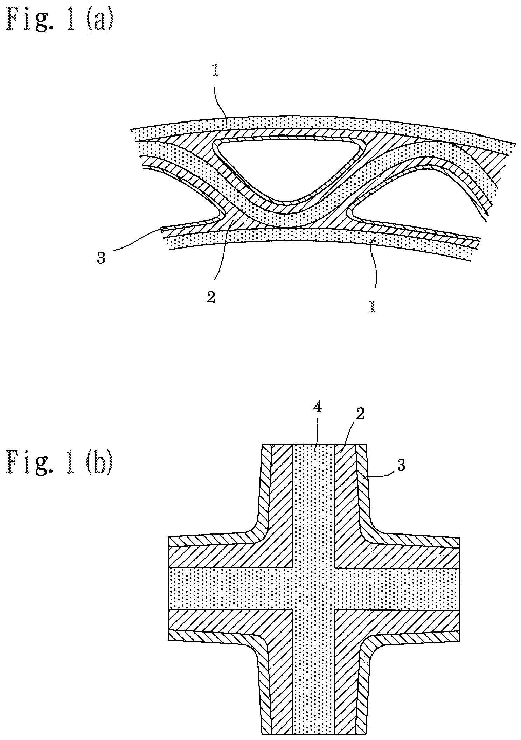

   Fig. 1 is schematic partial cross-sectional views of the catalysts of the present invention having a two-layer structure.
[Fig. 2]

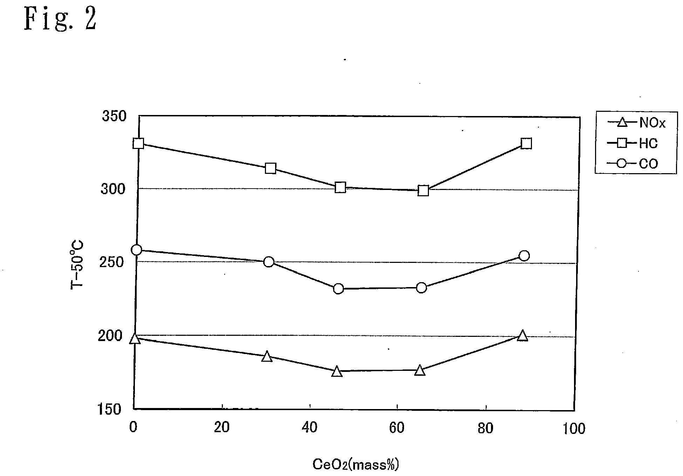

   Fig. 2 is a graph showing the correlation between T-50 and the CeO₂ content of a composite oxide in a lower layer.
[Fig. 3]

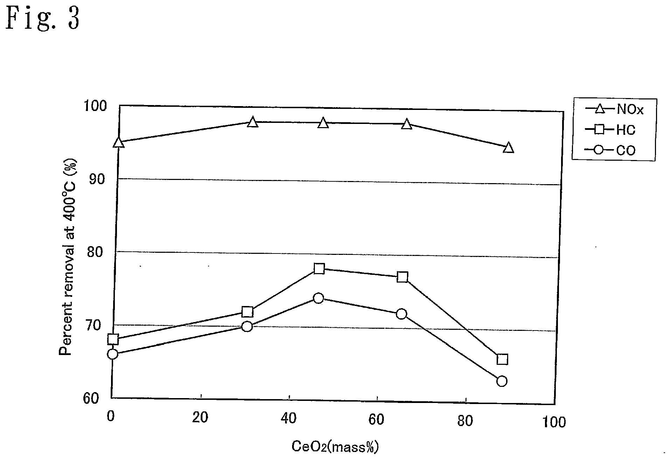

   Fig. 3 is a graph showing the correlation between percent removal at 400°C and the CeO₂ content of a composite oxide in a lower layer.
[Fig. 4]

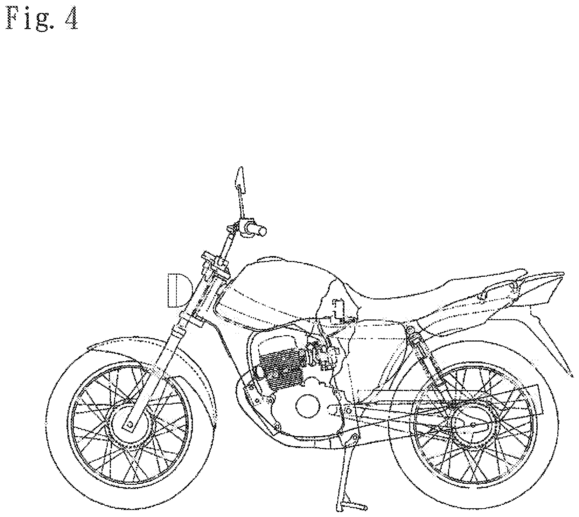

   Fig. 4 is a schematic side view of a motorcycle employing the exhaust gas cleaning catalyst of the present invention.
[Fig. 5]

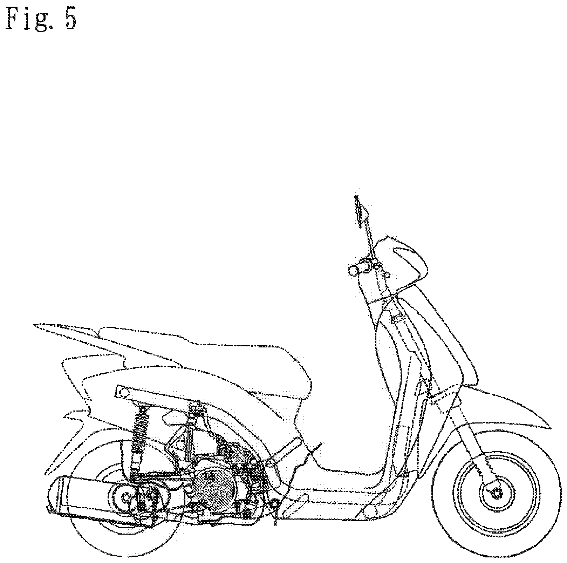

   Fig. 5 is a schematic side view of a scooter-type motorcycle employing the exhaust gas cleaning catalyst of the present invention.
[Fig. 6]

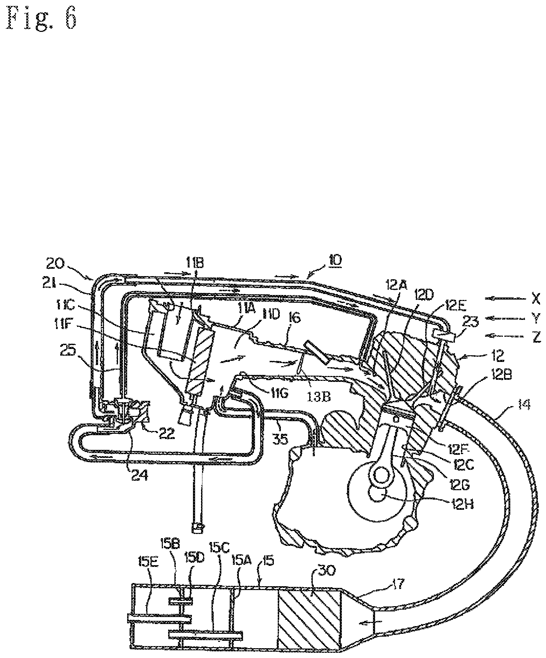

   Fig. 6 schematically shows an exhaust gas cleaning apparatus of the motorcycle shown in Fig. 4 and peripheral components of the apparatus, the motorcycle incorporating the exhaust gas cleaning catalyst of the present invention.
[Fig. 7]

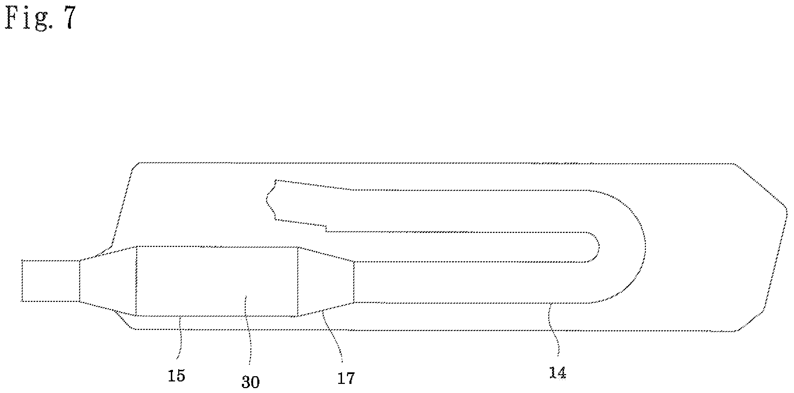

   Fig. 7 schematically shows an exhaust gas cleaning apparatus of the motorcycle shown in Fig. 4 and a muffler, the motorcycle incorporating the exhaust gas cleaning catalyst of the present invention.
[Fig. 8]

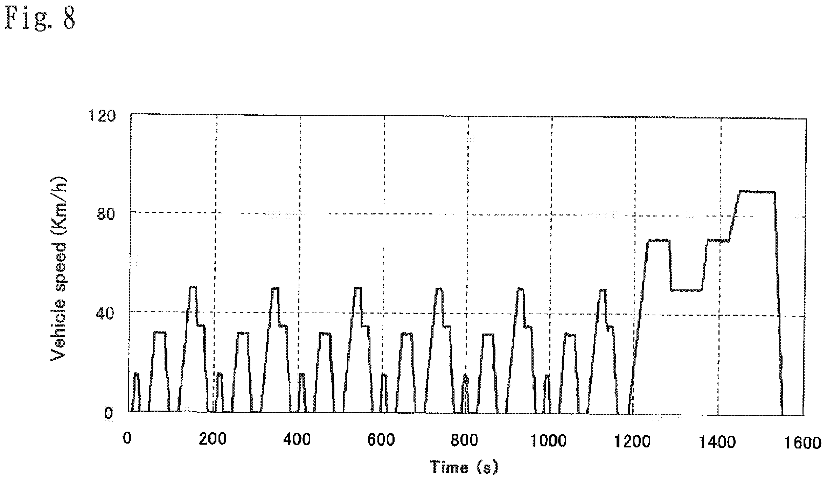

   Fig. 8 is a graph showing driving conditions for determining air/fuel ratio in a motorcycle and a common four-wheel vehicle.
[Fig. 9]

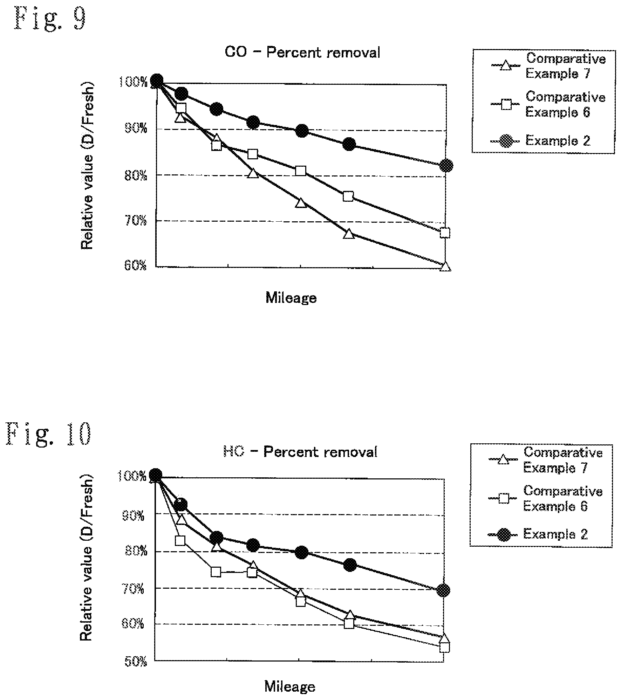

   Fig. 9 is a graph showing the correlation between mileage and percent removal of CO.
[Fig. 10]
   Fig. 10 is a graph showing the correlation between mileage and percent removal of HC.
[Fig. 11]

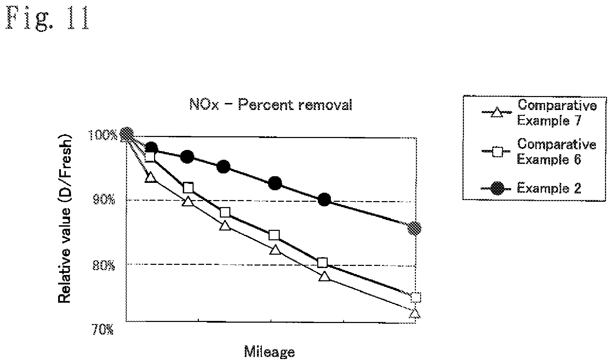

   Fig. 11 is a graph showing the correlation between mileage and percent removal of NOₓ.
[Fig. 12]

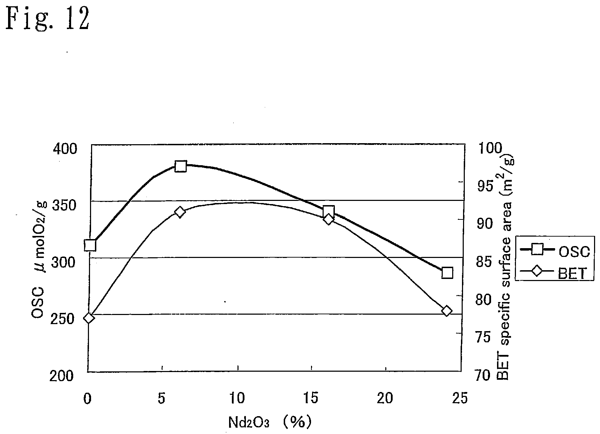

   Fig. 12 is a graph showing the correlation between the Nd₂O₃ content (mass%) of a carrier and the BET specific surface area or OSC performance of thermally treated referential catalysts 1 to 4.
[Fig. 13]

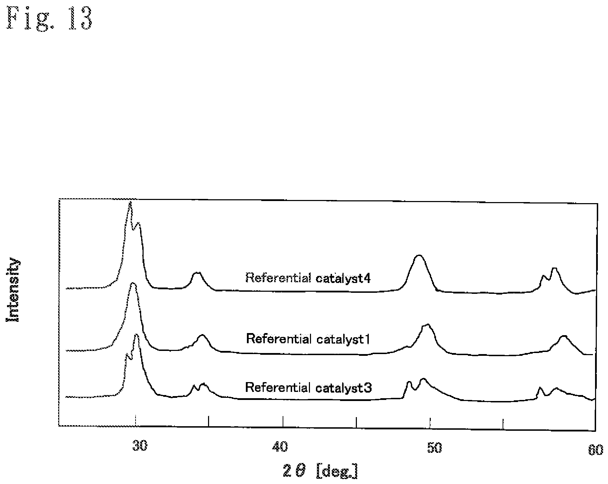

   Fig. 13 is a chart showing XRD data of thermally treated referential catalysts 1, 3, and 4.
[Fig. 14]

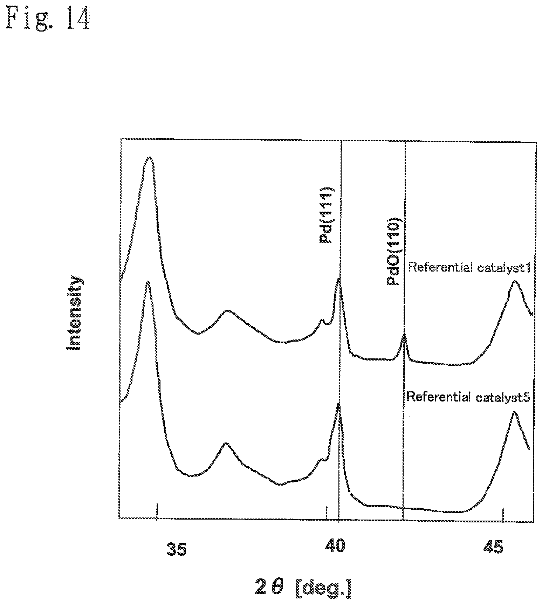

   Fig. 14 is a chart showing TPR data of referential catalysts 1 and 5 which have been subjected to severe conditions.

### Description of Embodiments

Embodiments of the present invention will next be described in detail.

As used herein, the term "saddle-type vehicle" encompasses common saddle-type vehicles (e.g., a saddle-type two-wheel vehicle, a saddle-type three-wheel vehicle, and a saddle-type four-wheel vehicle), as well as scooter-type motorcycles.

The exhaust gas cleaning catalyst for a saddle-type vehicle of the present invention includes a support formed of a ceramic material or a metallic material; a first catalyst layer formed on a surface of the support; and a second catalyst layer formed on the first catalyst layer, wherein the first catalyst layer includes a carrier formed of a cerium-zirconium composite oxide having a CeO₂ content of 45 to 70 mass%, a ZrO₂ content of 20 to 45 mass%, an Nd₂O₃ content of 2 to 20 mass%, and an La₂O₃ content of 1 to 10 mass%, and a catalyst component which is supported on the carrier and contains metallic Pd or Pd oxide.

The carrier employed in the first catalyst layer of the exhaust gas cleaning catalyst for a saddle-type vehicle of the present invention may be obtained through the following procedure: a solution containing a Ce compound which can be converted into CeO₂ through firing, a Zr compound which can be converted into ZrO₂ through firing, an Nd compound which can be converted into Nd₂O₃ through firing, and an La compound which can be converted into La₂O₃ through firing is prepared; the pH of the solution is adjusted to about 6.0 to about 8.0; and the resultant precipitate is filtered, washed, and thoroughly dried, followed by firing (e.g., firing at 1,000°C for three hours).

The catalyst component (i.e., metallic Pd or Pd oxide) employed in the first catalyst layer of the exhaust gas cleaning catalyst for a saddle-type vehicle of the present invention may be supported on the above-obtained carrier by adding the carrier to an aqueous solution of a water-soluble palladium compound under stirring so that the carrier absorbs the solution, followed by thorough drying, and then firing (e.g., firing at 500°C for three hours).

In the first catalyst layer of the exhaust gas cleaning catalyst for a saddle-type vehicle of the present invention, preferably, the carrier on which the catalyst component (i.e., metallic Pd or Pd oxide) is supported contains CeO₂ in an amount of 45 to 70 mass% and ZrO₂ in an amount of 20 to 45 mass% wherein the mass of CeO₂ is greater than that of ZrO₂, so that reduction of catalytic activity-which is caused by sintering of Pd fine particles due to metallization of PdO-is suppressed, and thus, even when the exhaust gas cleaning catalyst is employed in an atmosphere of exhaust gas from a saddle-type vehicle, in which the concentration of oxygen, HC, or CO changes drastically, and A/F window is very wide, the catalytic activity of the catalyst is less likely to be lowered. When the CeO₂ content exceeds 70 mass% or the ZrO₂ content is less than 20 mass%, or when the CeO₂ content is less than 45 mass% or the ZrO₂ content exceeds 45 mass%, the active species may fail to sufficiently exhibit its performance, and the specific surface area of the support may be considerably reduced at a high temperature (e.g., 900°C or higher), resulting in thermal deterioration of the catalyst, which is not preferred. When the CeO₂ content is less than 45 mass%, the ability to suppress reduction of PdO tends to be lowered, whereas when the ZrO₂ content exceeds 45 mass%, the CeO₂ content decreases commensurate therewith, which is not preferred.

In the first catalyst layer of the exhaust gas cleaning catalyst for a saddle-type vehicle of the present invention, the cerium-zirconium composite oxide carrier on which the catalyst component (i.e., metallic Pd or Pd oxide) is supported further contains Nd₂O₃ and La₂O₃. When Nd₂O₃ and La₂O₃ are incorporated, CeO₂ exhibits improved thermal stability, and the cerium-zirconium composite oxide carrier exhibits improved OSC performance, whereby the catalyst formed by supporting the noble metal on the carrier exhibits improved exhaust gas cleaning performance and high durability. Achievement of these effects requires an Nd₂O₃ content of 2 mass% or more and an La₂O₃ content of 1 mass% or more. However, when the Nd₂O₃ content exceeds 20 mass% or the La₂O₃ content exceeds 10 mass%, the relative CeO₂ or ZrO₂ content decreases commensurate therewith, and the cerium-zirconium composite oxide carrier tends to exhibit impaired properties.

The first catalyst layer of the exhaust gas cleaning catalyst for a saddle-type vehicle of the present invention employs, as a catalyst component, Pd oxide or metallic Pd, which is a relatively inexpensive noble metal. When the catalyst component content is less than 0.3 mass% (as reduced to metallic Pd) on the basis of the mass of the carrier. exhaust gas cleaning performance tends to become insufficient, whereas when the catalyst component content exceeds 5 mass% (as reduced to metallic Pd), the cost required for the exhaust gas cleaning catalyst increases, but an effect commensurate with an increase in cost may fail to be attained. Therefore, the catalyst component content is preferably 0.3 to 5 mass% (as reduced to metallic Pd) on the basis of the mass of the carrier.

In the exhaust gas cleaning catalyst for a saddle-type vehicle of the present invention, the second catalyst layer formed on the first catalyst layer includes a carrier formed of a zirconium composite oxide having a ZrO₂ content of 50 to 95 mass%, a CeO₂ content of 0 to 40 mass%, an Nd₂O₃ content of 2 to 20 mass%, and an La₂O₃ content of 1 to 10 mass%, and a catalyst component which is supported on the carrier and contains metallic Rh or Rh oxide, or both metallic Rh or Rh oxide and metallic Pt or Pt oxide.

In the second catalyst layer of the exhaust gas cleaning catalyst for a saddle-type vehicle of the present invention, the carrier on which the catalyst component (i.e., metallic Rh or Rh oxide, or both metallic Rh or Rh oxide and metallic Pt or Pt oxide) is supported is formed of a zirconium composite oxide having a ZrO₂ content of 50 to 95 mass%, a CeO₂ content of 0 to 40 mass%, an Nd₂O₃ content of 2 to 20 mass%, and an La₂O₃ content of 1 to 10 mass%. The carrier may be obtained through the following procedure: a solution containing a Zr compound which can be converted into ZrO₂ through firing, a Ce compound which can be converted into CeO₂ through firing, an Nd compound which can be converted into Nd₂O₃ through firing, and an La compound which can be converted into La₂O₃ through firing is prepared; the pH of the solution is adjusted to about 6.0 to about 8.0; and the resultant precipitate is filtered, washed, and thoroughly dried, followed by firing (e.g., firing at 1,000°C for three hours).

The catalyst component (i.e., metallic Rh or Rh oxide, or both metallic Rh or Rh oxide and metallic Pt or Pt oxide) employed in the second catalyst layer of the exhaust gas cleaning catalyst for a saddle-type vehicle of the present invention may be supported on the above-obtained carrier by adding the carrier to an aqueous solution of a water-soluble rhodium compound or an aqueous solution containing a water-soluble rhodium compound and a water-soluble platinum compound under stirring so that the carrier absorbs the solution, followed by thorough drying, and then firing (e.g., firing at 500°C for three hours).

In the second catalyst layer of the exhaust gas cleaning catalyst for a saddle-type vehicle of the present invention, the carrier on which the catalyst component (i.e., metallic Rh or Rh oxide, or both metallic Rh or Rh oxide and metallic Pt or Pt oxide) is supported contains ZrO₂ in an amount of 50 to 95 mass% and CeO₂ in an amount of 0 to 40 mass%, so that the catalyst component can more effectively remove HC, CO, or NOₓ contained in exhaust gas at lower temperature, and the catalyst exhibits thermal resistance and can be prevented from being thermally degraded. That is, even when the carrier of the second catalyst layer contains no CeO₂, the intended effects of the present invention can be attained. When the ZrO₂ content exceeds 95 mass%, the Nd₂O₃ or La₂O₃ content decreases commensurate therewith, and the intended effects of the present invention may be impaired, whereas when the ZrO₂ content is less than 50 mass%, the carrier tends to exhibit impaired properties.

In the second catalyst layer of the exhaust gas cleaning catalyst for a saddle-type vehicle of the present invention, the zirconium composite oxide carrier on which the catalyst component (i.e., metallic Rh or Rh oxide, or both metallic Rh or Rh oxide and metallic Pt or Pt oxide) is supported further contains Nd₂O₃ and La₂O₃. When Nd₂O₃ and La₂O₃ are incorporated, the zirconium composite oxide carrier exhibits improved OSC performance, whereby the catalyst formed by supporting the noble metal on the carrier exhibits drastically improved exhaust gas cleaning performance and high durability. Achievement of these effects requires an Nd₂O₃ content of 2 mass% or more and an La₂O₃ content of 1 mass% or more. However, when the Nd₂O₃ content exceeds 20 mass% or the La₂O₃ content exceeds 10 mass%, the relative CeO₂ or ZrO₂ content decreases commensurate therewith, and the zirconium composite oxide carrier tends to exhibit impaired properties.

In the exhaust gas cleaning catalyst for a saddle-type vehicle of the present invention, from the viewpoint of maintaining relatively high activity at relatively low cost (in consideration of the prices of Pd, Rh, and Pt), preferably, when the catalyst component of the second catalyst layer is metallic Rh or Rh oxide, the ratio by mass of Pd/Rh, as reduced to metal, is 1/1 to 20/1, or when the catalyst component of the second catalyst layer is both metallic Rh or Rh oxide and metallic Pt or Pt oxide, the ratio by mass of (Pt + Pd)/Rh, as reduced to metal, is 1/1 to 20/1.

In the exhaust gas cleaning catalyst for a saddle-type vehicle of the present invention, as in the case of a conventional exhaust gas cleaning ternary catalyst supported on a support, the aforementioned first catalyst layer and second catalyst layer are supported on a support formed of a ceramic or metallic material. No particular limitation is imposed on the form of the support formed of a ceramic or metallic material. However, the support is generally in the form of a monolith (e.g., honeycomb or plate) or pellets, and is preferably in a honeycomb form. Examples of the material of the support include ceramic materials such as alumina, mullite, and cordierite; and metallic materials such as stainless steel.

For production of the exhaust gas cleaning catalyst for a saddle-type vehicle of the present invention, firstly, the aforementioned carrier having the catalyst component (metallic Pd or Pd oxide) supported thereon (50 to 80 mass%), a heat-resistant alumina component (10 to 40 mass%), a binder material (solid content: 5 to 20 mass%), and distilled water (appropriate amount) are added to a ball mill and wet-milled, to thereby prepare a wash-coating liquid. Subsequently, a support formed of a ceramic or metallic material (e.g., a stainless steel metallic honeycomb support (test piece, 300 cells, φ30 × 30L, capacity: 21 cc)) is immersed in the wash-coating liquid. Thereafter, excess wash-coating liquid in the cells of the support is removed through air blowing, followed by drying and firing (e.g., at 500°C for one hour), to thereby form a first catalyst layer. In this case, preferably, the catalyst component content is adjusted to 0.7 to 5.5 g (as reduced to metallic Pd) on the basis of 1 L of the catalyst. When the catalyst component content is less than 0.7 g (as reduced to metallic Pd) on the basis of 1 L of the catalyst, the catalyst tends to exhibit insufficient exhaust gas cleaning performance, whereas when the catalyst component content exceeds 5.5 g (as reduced to metallic Pd) on the basis of 1 L of the catalyst, the cost required for the exhaust gas cleaning catalyst increases, but an effect commensurate with an increase in cost may fail to be attained. Therefore, the catalyst component content is preferably 0.7 to 5.5 g (as reduced to metallic Pd) on the basis of 1 L of the catalyst.

Thereafter, the aforementioned carrier having the catalyst component (metallic Rh or Rh oxide, or both metallic Rh or Rh oxide and metallic Pt or Pt oxide) supported thereon (50 to 80 mass%), a heat-resistant alumina component (10 to 40 mass%), a binder material (solid content: 5 to 20 mass%), and distilled water (appropriate amount) are added to a ball mill and wet-milled, to thereby prepare a wash-coating liquid. Subsequently, the support having thereon the first catalyst layer is immersed in the wash-coating liquid. Thereafter, excess wash-coating liquid in the cells of the support is removed through air blowing, followed by drying and firing (e.g., at 500°C for one hour), to thereby form a second catalyst layer. In this case, preferably, the total amount of Pd, Ph, and Pt is adjusted to 0.7 to 6.5 g (as reduced to metal) on the basis of 1 L of the catalyst. When the total catalyst component content is less than 0.7 g (as reduced to metal) on the basis of 1 L of the catalyst, the catalyst tends to exhibit insufficient exhaust gas cleaning performance, whereas when the total catalyst component content exceeds 6.5 g (as reduced to metal) on the basis of 1 L of the catalyst, the cost required for the exhaust gas cleaning catalyst increases, but an effect commensurate with an increase in cost may fail to be attained. Therefore, the total catalyst component content is preferably 0.7 to 6.5 g (as reduced to metal) on the basis of 1 L of the catalyst.

The heat-resistant alumina component employed in the present invention may be any of those generally used in conventional exhaust gas cleaning ternary catalysts. However, the heat-resistant alumina component is preferably Al₂O₃, La₂O₃-Al₂O₃ composite oxide, BaO-Al₂O₃ composite oxide, MgO-Al₂O₃ composite oxide, ZrO₂-CeO₂-Al₂O₃ composite oxide, or a mixture thereof.

In the exhaust gas cleaning catalyst for a saddle-type vehicle of the present invention, the ratio by mass of the first catalyst layer to the second catalyst layer (first catalyst layer : second catalyst layer) is preferably 1 to 3 : 1, from the viewpoints of, for example, cost and performance. When the ratio by mass of the first catalyst layer to the second catalyst layer is lower than 1 : 1 (i.e., when the mass of the second catalyst layer is greater than that of the first catalyst layer), a high cost is required for producing a catalyst having the same performance as a catalyst in which the ratio (first catalyst layer : second catalyst layer) falls within the above preferred range, whereas when the ratio by mass of the first catalyst layer to the second catalyst layer is higher than 3 : 1 (i.e., when the mass of the second catalyst layer is smaller than that of the first catalyst layer), the resultant catalyst tends to exhibit poor performance, as compared with a catalyst whose mass is the same as the catalyst and in which the ratio (first catalyst layer : second catalyst layer) falls within the above preferred range.

The exhaust gas cleaning catalyst for a saddle-type vehicle of the present invention includes two catalyst layers; specifically, the lower layer (i.e., the first catalyst layer) containing Pd, and the upper layer (i.e., the second catalyst layer) containing Rh or (Rh + Pt), which exhibits high ability to remove reducing gas and high durability. Therefore, diffusion of reducing gas into the Pd-containing lower layer can be suppressed even when air/fuel ratio is in a rich state or changes, and thus the durability of the Pd-containing lower layer, which has been improved by the aforementioned specific carrier, can be further enhanced.

In the exhaust gas cleaning catalyst for a saddle-type vehicle of the present invention, diffusion of reducing gas into the Pd-containing lower layer can be suppressed even when the air/fuel ratio is in a rich state. Therefore, in 7 the case where the catalyst of the present invention is mounted in an engine of a saddle-type vehicle, even when the engine is operated at an average air/fuel ratio of 14.5 or less, which is richer than the stoichiometric air/fuel ratio (i.e., 14.6), the Pd-containing lower layer exhibits improved durability as described above, and also exhibits improved NOₓ removal performance.

The present invention will next be described with reference to Production Examples, Examples, Comparative Examples, performance tests, and referential tests. In the below-described Production Examples, Examples, Comparative Examples, and referential tests, the relative amount (parts by mass) of each component does not include the amount of a dispersion medium or a solvent,

### Production Example 1 (corresponding to Comparative Examples)

Cerium nitrate (88 parts by mass, as reduced to CeO₂). neodymium nitrate (10 parts by mass, as reduced to Nd₂O₃), and lanthanum nitrate (2 parts by mass, as reduced to La₂O₃) were added to a 5-L flask, and pure water (2,000 mL) was added thereto, followed by stirring for one hour, to thereby prepare a uniform solution. While the solution was stirred, a 1N NH₄OH solution was added dropwise thereto until a pH of 7 was achieved. The resultant precipitate was filtered, washed, and dried at 80°C for 15 hours, followed by firing at 1,000°C for three hours, to thereby prepare 88CeO₂-10Nd₂O₃-2La₂O₃ composite oxide B1 (i.e., composite oxide containing no ZrO₂ and having a CeO₂ content falling outside the scope of the present invention).

### Production Example 2

Cerium nitrate (65 parts by mass, as reduced to CeO₂), zirconium nitrate (25 parts by mass, as reduced to ZrO₂), neodymium nitrate (8 parts by mass, as reduced to Nd₂O₃), and lanthanum nitrate (2 parts by mass, as reduced to La₂O₃) were added to a 5-L flask, and pure water (2,000 mL) was added thereto, followed by stirring for one hour, to thereby prepare a uniform solution. While the solution was stirred, a 1N NH₄OH solution was added dropwise thereto until a pH of 7 was achieved. The resultant precipitate was filtered, washed, and dried at 80°C for 15 hours, followed by firing at 1,000°C for three hours, to thereby prepare 65CeO₂-25ZrO₂-8Nd₂O₃-2La₂O₃ composite oxide B2.

### Production Example 3

The procedure of Production Example 2 was repeated, except that cerium nitrate (46 parts by mass, as reduced to CeO₂), zirconium nitrate (46 parts by mass, as reduced to ZrO₂), neodymium nitrate (6 parts by mass, as reduced to Nd₂O₃), and lanthanum nitrate (2 parts by mass, as reduced to La₂O₃) were employed, to thereby prepare 46CeO₂-46ZrO₂-6Nd₂O₃-2La₂O₃ composite oxide B3.

### Production Example 4

The procedure of Production Example 2 was repeated, except that cerium nitrate (30 parts by mass, as reduced to CeO₂), zirconium nitrate (60 parts by mass, as reduced to ZrO₂), neodymium nitrate (8 parts by mass, as reduced to Nd₂O₃), and lanthanum nitrate (2 parts by mass, as reduced to La₂O₃) were employed, to thereby prepare 30CeO₂-60ZrO₂-8Nd₂O₃-2La₂O₃ composite oxide B4.

### Production Example 5

The procedure of Production Example 2 was repeated, except that zirconium nitrate (92 parts by mass, as reduced to ZrO₂), neodymium nitrate (5 parts by mass, as reduced to Nd₂O₃), and lanthanum nitrate (3 parts by mass, as reduced to La₂O₃) were employed, and cerium nitrate was not employed, to thereby prepare 92ZrO₂-5Nd₂O₃-3La₂O₃ composite oxide B5.

### Production Example 6 (corresponding to Comparative Examples)

The procedure of Production Example 2 was repeated, except that cerium nitrate (46 parts by mass, as reduced to CeO₂) and zirconium nitrate (54 parts by mass, as reduced to ZrO₂) were employed, and neither neodymium nitrate nor lanthanum nitrate was employed, to thereby prepare 46CeO₂-54ZrO₂ composite oxide B6 (i.e., composition oxide containing neither Nd₂O₃ nor La₂O₃).

### Example 1

Powder of composite oxide B2 prepared in Production Example 2 (60 parts by mass), active alumina powder (35 parts by mass), an alumina sol binder (5 parts by mass, as reduced to alumina), and pure water (150 parts by mass) were added to a ball mill and wet-milled for eight hours, to thereby prepare a slurry (wash-coating liquid) for a lower layer.

Separately, powder of composite oxide B4 prepared in Production Example 4 (30 parts by mass), active alumina powder (65 parts by mass), an alumina sol binder (5 parts by mass, as reduced to alumina), and pure water (200 parts by mass) were added to a ball mill and wet-milled for eight hours, to thereby prepare a slurry (wash-coating liquid) for an upper layer.

There were provided two stainless steel metallic honeycomb supports; specifically, a test piece (300 cells, core size: φ30 × 30L, core capacity: 25.6 cc), and a support for evaluation in an actual vehicle (core size: φ40 × 90L, core capacity: 113 cc). Firstly, each metallic honeycomb support was wash-coated with the aforementioned slurry for a lower layer, followed by drying and firing at 500°C for one hour, to thereby form a lower coating layer. The amount of the lower wash-coating layer was 100 g on the basis of 1 L of the support base.

Subsequently, the metallic honeycomb support having thereon the aforementioned lower coating layer was immersed in an aqueous solution of palladium nitrate (specific concentration), and then the resultant product was removed from the solution, followed by firing at 500°C for one hour, to thereby form a palladium-supported lower catalyst layer.

Next, the metallic honeycomb support having thereon the aforementioned palladium-supported lower catalyst layer was wash-coated with the aforementioned slurry an upper layer, followed by drying and firing at 500°C for one hour, to thereby form an upper coating layer. The amount of the upper wash-coating layer was 50 g on the basis of 1 L of the support base.

Then, the metallic honeycomb support having thereon the aforementioned upper coating layer was immersed in a mixture of rhodium nitrate (specific concentration) and a platinum nitric acid solution, and the resultant product was removed from the mixture, followed by firing at 500°C for one hour, to thereby prepare a catalyst having a two-layer structure including the palladium-supported lower layer and the platinum-rhodium-supported upper layer. Fig. 1 is schematic partial cross-sectional views of the thus-prepared catalysts having a two-layer structure. Fig. 1(a) shows a metallic honeycomb catalyst, and Fig. 1(b) shows a monolith honeycomb catalyst. In Figs. 1(a) and 1(b), reference numeral 1 denotes a stainless steel metallic honeycomb support; 2 a palladium-supported lower layer (first catalyst layer); 3 a platinum-rhodium-supported upper layer (second catalyst layer); and 4 a ceramic honeycomb support. In each of the above-prepared catalysts, the amount of palladium supported on the lower layer was found to be 1.50 g (as reduced to Pd) on the basis of 1 L of the support base; the amount of platinum supported on the upper layer was found to be 0.75 g (as reduced to Pt) on the basis of 1 L of the support base; and the amount of rhodium supported on the upper layer was found to be 0.15 g (as reduced to Rh) on the basis of 1 L of the support base.

### Example 2

The procedure of Example 1 was repeated, except that the powder of composite oxide B2 prepared in Production Example 2 was replaced with powder of composite oxide B3 prepared in Production Example 3 for the preparation of a slurry for a lower layer, to thereby prepare catalysts having a two-layer structure.

### Comparative Example 1 (lower layer falls outside the scope of the present invention)

The procedure of Example 1 was repeated, except that the powder of composite oxide B2 prepared in Production Example 2 was replaced with powder of composite oxide B1 prepared in Production Example 1 for the preparation of a slurry for a lower layer, to thereby prepare catalysts having a two-layer structure.

### Comparative Example 2 (lower layer falls outside the scope of the present invention)

The procedure of Example 1 was repeated, except that the powder of composite oxide B2 prepared in Production Example 2 was replaced with powder of composite oxide B4 prepared in Production Example 4 for the preparation of a slurry for a lower layer, to thereby prepare catalysts having a two-layer structure.

### Comparative Example 3 (lower layer falls outside the scope of the present invention)

The procedure of Example 1 was repeated, except that the powder of composite oxide B2 prepared in Production Example 2 was replaced with powder of composite oxide B5 prepared in Production Example 5 for the preparation of a slurry for a lower layer, to thereby prepare catalysts having a two-layer structure.

### Example 3

The procedure of Example 2 was repeated, except that the powder of composite oxide B4 prepared in Production Example 4 was replaced with powder of composite oxide B5 prepared in Production Example 5 for the preparation of a slurry for an upper layer, to thereby prepare catalysts having a two-layer structure.

### Example 4

The procedure of Example 2 was repeated, except that the amount of the lower wash-coating layer on the basis of 1 L of the support base was increased from 100 g to 150 g, and the amount of the upper wash-coating layer on the basis of 1 L of the support base was reduced from 50 g to 30 g, to thereby prepare catalysts having a two-layer structure.

### Example 5

The procedure of Example 2 was repeated, except that the powder of composite oxide B3 prepared in Production Example 3 (30 parts by mass), active alumina powder (65 parts by mass), an alumina sol binder (5 parts by mass, as reduced to alumina), and pure water (150 parts by mass) were employed for the preparation of a slurry for a lower layer, to thereby prepare catalysts having a two-layer structure.

### Comparative Example 4 (upper layer falls outside the scope of the present invention)

The procedure of Example 2 was repeated, except that the powder of composite oxide B4 prepared in Production Example 4 was replaced with powder of composite oxide B3 prepared in Production Example 3 for the preparation of a slurry for an upper layer, to thereby prepare catalysts having a two-layer structure.

### Comparative Example 5 (both lower layer and upper layer contain neither Nd₂O₃ nor La₂O₃)

The procedure of Example 1 was repeated, except that the powder of composite oxide B2 prepared in Production Example 2 was replaced with powder of composite oxide B6 prepared in Production Example 6 for the preparation of a slurry for a lower layer, and powder of composite oxide B4 prepared in Production Example 4 was replaced with powder of composite oxide B6 prepared in Production Example 6 for the preparation of a slurry for an upper layer, to thereby prepare catalysts having a two-layer structure.

### Comparative Example 6 (lower layer contains no composite oxide)

The procedure of Example 1 was repeated, except that the powder of composite oxide B2 prepared in Production Example 2 was not employed, and active alumina powder (95 parts by mass), an alumina sol binder (5 parts by mass, as reduced to alumina), and pure water (150 parts by mass) were employed for the preparation of a slurry for a lower layer, to thereby prepare catalysts having a two-layer structure.

### Comparative Example 7 (single-layer catalyst)

There were provided two stainless steel metallic honeycomb supports; specifically, a test piece (300 cells, core size: φ30 × 30L, core capacity: 25.6 cc), and a support for evaluation in an actual vehicle (core size: φ40 × 90L, core capacity: 113 cc). Each metallic honeycomb support was wash-coated with a slurry for a lower layer produced in the same manner as that described in Example 2, followed by drying and firing at 500°C for one hour, to thereby form a coating layer. The mass of the wash-coating layer was 150 g on the basis of 1 L of the support base. Subsequently, the metallic honeycomb support having thereon the aforementioned coating layer was immersed in a mixture of palladium nitrate (specific concentration) and a nitric acid solution of rhodium nitrate and platinum, and the resultant product was removed from the mixture, followed by firing at 500°C for one hour, to thereby prepare a single-layer catalyst having palladium, platinum, and rhodium supported thereon. In each of the thus-prepared catalysts, the amount of supported palladium was found to be 1.50 g (as reduced to Pd) on the basis of 1 L of the support base; the amount of supported platinum was found to be 0.75 g (as reduced to Pt) on the basis of 1 L of the support base; and the amount of supported rhodium was found to be 0.15 g (as reduced to Rh) on the basis of 1 L of the support base.

The compositions of the composite oxides produced in Production Examples 1 to 6 are summarized in Table 1. The structures of the catalysts prepared in Examples 1 to 5 and Comparative Examples 1 to 7 are summarized in Table 2.
[Table 1]

**Table 1**

| | | |
|---|---|---|
| Composite oxide B1 | For Comparative Examples | 88CeO₂-10Nd₂O₃-2La₂O₃ |
| Composite oxide B2 | For lower layer | 65CeO₂-25ZrO₂-8Nd₂O₃-2La₂O₃ |
| Composite oxide B3 | For lower layer | 46CeO₂-46ZrO₂-6Nd₂O₃-2La₂O₃ |
| Composite oxide B4 | For upper layer | 30CeO₂-60ZrO₂-8Nd₂O₃-2La₂O₃ |
| Composite oxide B5 | For upper layer | 92ZrO₂-5Nd₂O₃-3La₂O₃ |
| Composite oxide B6 | For Comparative Examples | 46CeO₂-54ZrO₂ |

[Table 2-1]

**Table 2 (part 1)**

| | First catalyst layer (lower layer) | | Second catalyst layer (upper layer) | | |
|---|---|---|---|---|---|
| | Composition (amount of coated component, g/L) | Noble metal (amount of supported metal, g/L) | Composition (amount of coated component, g/L) | Noble metal (amount of supported metal, g/L) | Note |
| Comparative Example 1 | Composite oxide B1 (60) | Pd (1.50) | Composite oxide B4 (15) | | The composite oxide of the lower layer falls outside the scope of the present invention. |
| | Active alumina (35) | | Active alumina (32.5) | Pt (0.75) | |
| | Binder (5) | | Binder (2.5) | Rh (0.15) | |
| Example 1 | Composite oxide B2 (60) | Pd (1.50) | Composite oxide B4 (15) | | |
| | Active alumina (35) | | Active alumina (32.5) | Pt (0.75) | |
| | Binder (5) | | Binder (2.5) | Rh (0.15) | |
| Example 2 | Composite oxide B3 (60) | Pd (1.50) | Composite oxide B4 (15) | | |
| | Active alumina (35) | | Active alumina (32.5) | Pt (0.75) | |
| | Binder (5) | | Binder (2.5) | Rh (0.15) | |
| Comparative Example 2 | Composite oxide B4 (60) | Pd (1.50) | Composite oxide B4 (15) | | The composite oxide of the lower layer falls outside the scope of the present invention. |
| | Active alumina (35) | | Active alumina (32.5) | Pt (0.75) | |
| | Binder (5) | | Binder (2.5) | Rh (0.15) | |
| Comparative Example 3 | Composite oxide B5 (60) | Pd (1.50) | Composite oxide B4 (15) | | The composite oxide of the lower layer falls outside the scope of the present invention. |
| | Active alumina (35) | | Active alumina (32.5) | Pt (0.75) | |
| | Binder (5) | | Binder (2.5) | Rh (0.15) | |
| Example 3 | Composite oxide B3 (60) | Pd (1.50) | Composite oxide B5 (15) | | |
| | Active alumina (35) | | Active alumina (32.5) | Pt (0.75) | |
| | Binder (5) | | Binder (2.5) | Rh (0.15) | |

[Table 2-2]

**Table 2 (part 2)**

| | First catalyst layer (lower layer) | | Second catalyst layer (upper layer) | | |
|---|---|---|---|---|---|
| | Composition (amount of coated component, g/L) | Noble metal (amount of supported metal, g/L) | Composition (amount of coated component, g/L) | Noble metal (amount of supported metal, g/L) | Note |
| Example 4 | Composite oxide B3 (90) | Pd (1.50) | Composite oxide B4 (9) | | Increase in amount of the lower coating layer |
| | Active alumina (52.5) | | Active alumina (19.5) | Pt (0.75) | Decrease in amount of the upper coating layer |
| | Binder (7.5) | | Binder (1.5) | Rh (0.15) | |
| Example 5 | Composite oxide B3 (30) | Pd (1.50) | Composite oxide B4 (15) | | Decrease by half in amount of the composite oxide of the lower coating layer |
| | Active alumina (65) | | Active alumina (32.5) | Pt (0.75) | |
| | Binder (5) | | Binder (2.5) | Rh (0.15) | |
| Comparative Example 4 | Composite oxide B3 (60) | Pd (1.50) | Composite oxide B3 (15) | | The composite oxide of the upper layer falls outside the scope of the present invention |
| | Active alumina (35) | | Active alumina (32.5) | Pt (0.75) | |
| | Binder (5) | | Binder (2.5) | Rh (0.15) | |
| Comparative Example 5 | Composite oxide B6 (60) | Pd (1.50) | Composite oxide B6 (15) | | Containing neither La₂O₃ nor Nd₂O₃ |
| | Active alumina (35) | | Active alumina (32.5) | Pt (0.75) | |
| | Binder (5) | | Binder (2.5) | Rh (0.15) | |
| Comparative Example 6 | | Pd (1.50) | Composite oxide B4 (15) | | The lower layer contains no composite oxide |
| | alumina Active (95) | | Active alumina (32.5) | Pt (0.75) | |
| | Binder (5) | | Binder (2.5) | Rh (0.15) | |
| Comparative Example 7 | Composite oxide B3 (90) | Pd (1.50) | | | Single-layer catalyst |
| | Active alumina (52.5) | Pt (0.75) | | | |
| | Binder (7.5) | Rh (0.15) | | | |

### <Model gas cleaning performance test of catalyst>

Each of the test piece catalysts prepared in Examples 1 to 5 and Comparative Examples 1 to 7 was placed in an electric furnace maintained at 900°C, and the catalyst was thermally treated for 24 hours under a stream of a 1 vol.% CO-N₂ gas mixture at 20 L/min, followed by cooling to room temperature. Subsequently, each of the catalysts was exposed to a model gas having the below-described composition, and the gas cleaning performance of the catalyst was evaluated by determining the percent reduction (percent removal) of HC, CO, or NOₓ (nitrogen oxides) contained in the model gas at 400°C, and the temperature at which the percent removal of HC, CO, or NOₓ reached 50% [i.e., T-50 (°C)]. Each catalyst was evaluated under the following conditions. The evaluation results are shown in Table 3.

Model gas composition: CO: 0.9%, C₃H₆: 900 ppm, C₃H₈: 450 ppm,
NO: 500 ppm, O₂: 0.5%, CO₂: 14%, H₂O: 10%, N₂: balance
A/F = 14.4
Gas flow rate: 25 L/min
Temperature elevation rate: 10 degrees (°C)/min
[Table 3]

**Table 3**

| | Catalyst structure | | T-50 (°C) | | | Percent removal (%) at 400°C | | |
|---|---|---|---|---|---|---|---|---|
| | Lower layer | Upper layer | CO | HC | NOₓ | CO | HC | NOₓ |
| Comp. Ex. 1 | B1 | B4 | 255 | 332 | 201 | 63 | 66 | 95 |
| Ex. 1 | B2 | B4 | 233 | 299 | 177 | 72 | 77 | 98 |
| Ex. 2 | B3 | B4 | 232 | 301 | 176 | 74 | 78 | 98 |
| Comp. Ex. 2 | B4 | B4 | 250 | 314 | 186 | 70 | 72 | 98 |
| Comp. Ex. 3 | B5 | B4 | 258 | 331 | 198 | 66 | 68 | 95 |
| Ex. 3 | B3 | B5 | 236 | 304 | 177 | 72 | 75 | 98 |
| Ex. 4 | B3 | B4 | 231 | 301 | 180 | 74 | 76 | 96 |
| Ex. 5 | B3 | B4 | 248 | 310 | 184 | 69 | 72 | 96 |
| Comp. Ex. 4 | B3 | B3 | 252 | 331 | 188 | 75 | 71 | 92 |
| Comp. Ex. 5 | B6 | B6 | 251 | 339 | 184 | 65 | 69 | 97 |
| Comp. Ex. 6 | No composite oxide | B4 | 275 | 343 | 192 | 66 | 64 | 96 |
| Comp. Ex. 7 | B3 | None | 277 | 348 | 208 | 62 | 61 | 92 |

Figs. 2 and 3 shows the results of the model gas cleaning performance test of the catalysts of Comparative Example 1 (the CeO₂ content of the composite oxide employed in the lower layer: 88 mass%), Example 1 (the CeO₂ content of the composite oxide employed in the lower layer: 65 mass%), Example 2 (the CeO₂ content of the composite oxide employed in the lower layer: 46 mass%), Comparative Example 2 (the CeO₂ content of the composite oxide employed in the lower layer: 30 mass%), and Comparative Example 3 (the CeO₂ content of the composite oxide employed in the lower layer: 0 mass%). Specifically, Fig. 2 is a graph showing the correlation between T-50 and the CeO₂ content of the composite oxide employed, and Fig. 3 is a graph showing the correlation between percent removal at 400°C and the CeO₂ content of the composite oxide employed. As is clear from Figs. 2 and 3, favorable results are obtained when the CeO₂ content of the composite oxide in the lower layer is 45 to 70 mass%.

The exhaust gas cleaning catalyst of the present invention is employed for a saddle-type vehicle. Examples of such a saddle-type vehicle include a motorcycle shown in Fig. 4 and a scooter-type motorcycle shown in Fig. 5.

Fig. 6 schematically shows an exhaust gas cleaning apparatus of the motorcycle (i.e., saddle-type vehicle) shown in Fig. 4 and peripheral components of the apparatus, the motorcycle incorporating the exhaust gas cleaning catalyst of the present invention. The exhaust gas cleaning apparatus 10 is mounted in the motorcycle, in which a fuel is supplied from a fuel injector 13A (the fuel injector may be replaced with a carburetor) to air supplied through an air cleaner 11 to an engine (internal combustion engine) 12. The exhaust gas cleaning apparatus 10 includes a secondary air feed device 20 for supplying secondary air (fresh air) cleaned by the air cleaner 11 to an exhaust port 12B of the engine 12; an exhaust muffler 15 connected via an exhaust tube 14 to the exhaust port 12B of the engine 12; and a catalytic converter 30 provided in the exhaust muffler 15. In Fig. 6, arrow X corresponds to the flow of air; arrow Y corresponds to vacuum pressure; and arrow Z corresponds to the flow of blow-by gas generated in a crankcase.

In the air cleaner 11, the interior of an air cleaner casing 11A is divided by a partition wall 11B into two chambers: a dirty-side chamber 11C and a clean-side chamber 11D. An external air inlet port 11E is provided on the dirty-side chamber 11C, and external air is fed into the dirty-side chamber 11C through the external air inlet port 11E. A filter element 11F is provided on the partition wall 11B so as to cover an opening for communicating the dirty-side chamber 11C with the clean-side chamber 11D, whereby air contained in the dirty-side chamber 11C is cleaned through the filter element 11F, and then fed into the clean-side chamber 11D. An air outlet port 11G is provided on the clean-side chamber 11D, and is connected, via a connecting tube 16, to a throttle valve 13B and the fuel injector 13A. The air outlet port 11G also communicates with an inlet port 12A of the engine 12.

The engine 12 is a single-cylinder four-cycle engine generally mounted in a motorcycle. The engine 12 includes an inlet valve 12D for opening or closing the inlet port 12A, which communicates with a cylinder bore 12C in the engine 12; and an exhaust valve 12E for opening or closing the exhaust port 12B, which communicates with the cylinder bore 12C. A piston 12F slidably provided in the cylinder bore 12C is connected to a crankshaft 12H via a conrod 12G. Upon an intake process (descent of the piston 12F) in a state where the inlet valve 12D of the engine 12 is open (the exhaust valve 12E is closed), air in the clean-side chamber 11D of the air cleaner 11 is fed into a space above the piston 12F in the cylinder bore 12C by means of negative pressure (on the side of the engine 12) generated by the descent of the piston 12F, and a fuel is supplied from the fuel injector 13A. Thus, a gas mixture of the fuel and air is supplied to the engine 12.

Subsequently, a compression process and a combustion process, which are common in a four-cycle engine, are performed, followed by an exhaust process (ascent of the piston 12F) in a state where the exhaust valve 12E is open (the inlet valve 12D is closed). Thus, combustion gas (exhaust gas) is discharged through the exhaust port 12B to the exhaust tube 14.

The exhaust muffler 15 is connected via a connection tube 17 to the rear end of the exhaust tube 14. The exhaust muffler 15 functions as a silencer for silencing and discharging high-temperature, high-pressure exhaust gas which has passed through the exhaust tube 14. As shown in Fig. 6, the exhaust muffler 15 is of a multi-stage expansion type; i.e., the muffler 15 is divided into a plurality of chambers by a plurality of partition walls 15A and 15B, and the chambers communicate with one another by means of communication tubes 15C, 15D, and 15E. The catalytic converter 30 is provided on the most upstream chamber of the muffler. The exhaust tube 14 (main portion), the exhaust muffler 15 (accommodation portion), and the connection tube 17 (connection portion) together form the exhaust pipe of the aforementioned vehicle.

The secondary air feed device 20 has a mechanism by which air (secondary air) in the clean-side chamber 11D of the air cleaner 11 is fed to the exhaust port 12B of the engine 12, and includes a secondary air feed tube 21 connecting the clean-side chamber 11D of the air cleaner 11 and the exhaust port 12B of the engine 12. The secondary air feed tube 21 has thereon a valve unit 22, and also has, between the valve unit 22 and the exhaust port 12B, a lead valve 23 for preventing reverse flow of exhaust gas through the exhaust port 12B to the secondary air feed tube 21. As shown in Fig. 6, the lead valve 23 is provided at a position near the exhaust port 12B (i.e., above the engine 12), from the viewpoint of improvement in following performance of the lead valve 23.

The valve unit 22 includes a secondary air feed control valve 24 for preventing supply of secondary air to the exhaust port 12B upon deceleration of the engine. The secondary air feed control valve 24 is configured so as to operate with respect to vacuum pressure at the inlet port 12A which is transmitted via a communication tube 25 connecting the valve unit 22 and the inlet port 12A of the engine 12.

In Fig. 6, reference numeral 35 denotes a communication tube connecting the clean-side chamber 11D of the air cleaner 11 and the crankcase of the engine 12. The communication tube 35 functions as a crankcase emission control device for returning blow-by gas generated in the crankcase to the engine 12 via the clean-side chamber 11D and the connecting tube 16, thereby preventing release of the blow-by gas.

As described above, the exhaust gas cleaning apparatus 10 includes, for example, the exhaust tube 14, the exhaust muffler 15, the connection tube 17, and the catalytic converter 30 provided in the exhaust muffler 15. The connection tube 17 connects the exhaust tube 14 and the exhaust muffler 15 which have different inner diameters, so as not to impede flow of exhaust gas from the exhaust tube 14 to the exhaust muffler 15. The exhaust muffler 15 is formed so as to have an inner diameter greater than that of the exhaust tube 14, from the viewpoint of improvement in gas emission performance. Therefore, the inner diameter of the connection tube 17 at the end connected to the exhaust tube 14 is almost equal to that of the exhaust tube 14, and the inner diameter of the connection tube 17 at the end connected to the exhaust muffler 15 is almost equal to that of the exhaust muffler 15; i.e., the connection tube 17 is in a tapered form with a smooth change in diameter from one end to the other end. The joint between the exhaust tube 14 and the connection tube 17 is welded, and the joint between the connection tube 17 and the exhaust muffler 15 is also welded.

Fig. 7 schematically shows an exhaust gas cleaning apparatus of the motorcycle shown in Fig. 4 and a muffler, the motorcycle incorporating the exhaust gas cleaning catalyst of the present invention. As in the case shown in Fig. 6, an exhaust muffler 15 is connected via a connection tube 17 to the rear end of an exhaust tube 14, and the connection tube 17 connects the exhaust tube 14 and the exhaust muffler 15 which have different inner diameters, so as not to impede flow of exhaust gas from the exhaust tube 14 to the exhaust muffler 15. The exhaust muffler 15 is formed so as to have an inner diameter greater than that of the exhaust tube 14, from the viewpoint of improvement in gas emission performance. Therefore, the inner diameter of the connection tube 17 at the end connected to the exhaust tube 14 is almost equal to that of the exhaust tube 14, and the inner diameter of the connection tube 17 at the end connected to the exhaust muffler 15 is almost equal to that of the exhaust muffler 15; i.e., the connection tube 17 is in a tapered form with a smooth change in diameter from one end to the other end. The exhaust muffler 15 functions as a silencer for silencing and discharging high-temperature, high-pressure exhaust gas which has passed through the exhaust tube 14. The exhaust muffler 15 includes therein a catalytic converter 30. The exhaust tube 14 (main portion), the exhaust muffler 15 (accommodation portion), and the connection tube 17 (connection portion) together form the exhaust pipe of the aforementioned vehicle.

The catalytic converter 30 of the present embodiment employs the exhaust gas cleaning catalyst for a saddle-type vehicle of the present invention, which catalyst is characterized by including a support formed of a ceramic material or a metallic material; a first catalyst layer formed on a surface of the support; and a second catalyst layer formed on the first catalyst layer, wherein the first catalyst layer includes a carrier formed of a cerium-zirconium composite oxide having a CeO₂ content of 45 to 70 mass%, a ZrO₂ content of 20 to 45 mass%, an Nd₂O₃ content of 2 to 20 mass%, and an La₂O₃ content of 1 to 10 mass%, and a catalyst component which is supported on the carrier and contains metallic Pd or Pd oxide; and the second catalyst layer includes a carrier formed of a zirconium composite oxide having a ZrO₂ content of 50 to 95 mass%, a CeO₂ content of 0 to 40 mass%, an Nd₂O₃ content of 2 to 20 mass%, and an La₂O₃ content of 1 to 10 mass%, and a catalyst component which is supported on the carrier and contains metallic Rh or Rh oxide, or both metallic Rh or Rh oxide and metallic Pt or Pt oxide.

The support forming the catalytic converter 30 is formed of a heat-resistant material; for example, a ceramic material such as alumina, mullite, or cordierite, or a metallic material such as stainless steel or an iron-aluminum-chromium alloy. No particular limitation is imposed on the form of the support. However, the support is generally in the form of monolith (e.g., honeycomb or plate) or pellets, and is preferably in a honeycomb form.

A motorcycle and a common four-wheel vehicle were driven under the driving conditions shown in Fig. 8, to thereby determine air/fuel ratio. The results are shown in Table 4.
[Table 4]

**Table 4**

| A/F | Motorcycle | Common four-wheel vehicle |
|---|---|---|
| A/F<14.0 | 48% | 18% |
| 14.0≤A/F<14.8 | 43% | 60% |
| 14.8≤A/F<15.2 | 3% | 7% |
| 15.2≤A/F | 6% | 15% |

As is clear from data shown in Table 4, when a motorcycle and a common four-wheel vehicle are driven under the same driving conditions, the engine of the motorcycle is operated under high load conditions (i.e., rich conditions, average air/fuel ratio = 14.5 or less), as compared with the case of the four-wheel vehicle.

<Test for evaluation of cleaning performance of exhaust gas from actual vehicle>

Each of the catalysts prepared in Examples 1 to 5 and Comparative Examples 1 to 7 was subjected to the following severe conditions for evaluation of the cleaning performance of exhaust gas from an actual vehicle.
Engine capacity: 1,300 cc
Fuel: unleaded gasoline
Gas temperature at inlet of catalyst: 730°C
Duration: 32 hours
A/F change: fuel cut: 10 seconds, rich spike (secondary air cut): 40 seconds

Subsequently, each of the catalysts which had been subjected to the aforementioned severe conditions was incorporated into a muffler of a motorcycle having the basic configuration as shown in Fig. 6 (secondary air cut), and the performance of the catalyst for cleaning exhaust gas from the actual vehicle was evaluated under the following conditions. The results (emission values) are shown in Table 5.
Vehicle employed: motorcycle with a single-cylinder engine (125 cc)
Fuel: unleaded gasoline
Driving mode: one cycle = range of 0 to 1,200 seconds shown in Fig. 8, max vehicle speed: 70 km/h
Measuring method: ISO 6460
[Table 5]

**Table 5**

| | Percent removal (%) | | |
|---|---|---|---|
| | CO | HC | NOₓ |
| Catalyst of Comparative Example 1 | 64 | 63 | 74 |
| Catalyst of Example 1 | 62 | 60 | 82 |
| Catalyst of Example 2 | 65 | 64 | 84 |
| Catalyst of Comparative Example 2 | 58 | 59 | 80 |
| Catalyst of Comparative Example 3 | 56 | 55 | 79 |
| Catalyst of Example 3 | 60 | 58 | 83 |
| Catalyst of Example 4 | 62 | 59 | 81 |
| Catalyst of Example 5 | 64 | 58 | 78 |
| Catalyst of Comparative Example 4 | 62 | 55 | 74 |
| Catalyst of Comparative Example 5 | 59 | 58 | 78 |
| Catalyst of Comparative Example 6 | 57 | 58 | 77 |
| Catalyst of Comparative Example 7 | 58 | 54 | 74 |

### <Test for evaluation of durability and cleaning performance of exhaust gas from actual vehicle>

The exhaust gas cleaning catalyst of Example 2, Comparative Example 6, or Comparative Example 7 was incorporated into the motorcycle employed in the aforementioned exhaust gas cleaning performance test, and the correlation between mileage (running distance) and percent removal of CO, HC, or NOₓ was determined. Fig. 9 shows the correlation between mileage and percent removal of CO; Fig. 10 shows the correlation between mileage and percent removal of HC; and Fig. 11 shows the correlation between mileage and percent removal of NOₓ.

### <Referential test>

The exhaust gas cleaning catalyst for a saddle-type vehicle of the present invention was evaluated in terms of the effect of Nd₂O₃ addition on the first catalyst layer (lower layer), thermal stability of the first catalyst layer, and the effect of suppressing reduction of PdO. When the second catalyst layer (upper layer) is present, Rh or Pt may affect the first catalyst layer and make evaluation difficult. Therefore, a referential catalyst was prepared by supporting only the first catalyst layer on a support, and the catalyst was employed for evaluation. Specifically, a referential catalyst was prepared by supporting Pd (1.50 g/L) on each of the following carriers:
48CeO₂-44ZrO₂-6Nd₂O₃-2La₂O₃ (referential catalyst 1) ;
45CeO₂-36ZrO₂-16Nd₂O₃-2La₂O₃ (referential catalyst 2) ;
46CeO₂-49ZrO₂-5La₂O₃ (referential catalyst 3) ;
46CeO₂-28ZrO₂-24Nd₂O₃-2La₂O₃ (referential catalyst 4) ; and
30CeO₂-60ZrO₂-8Nd₂O₃-2La₂O₃ (referential catalyst 5).

Each of referential catalysts 1 to 4 was placed in an electric furnace maintained at 900°C, and the catalyst was thermally treated for 24 hours under a stream of a 1 vol.% CO-N₂ gas mixture at 20 L/min. Subsequently, the catalyst coating layer was scraped off, and the resultant powder was employed for determination of BET specific surface area, OSC performance, and Pd crystallite size (through XRD) The results are shown in Table 6.
[Table 6]

**Table 6**

| | BET specific surface area (m²/g) | OSC performance (µmmol-O₂/g) | Pd crystallite size (XRD) (nm) |
|---|---|---|---|
| Referential catalyst 1 | 91 | 381 | 10.8 |
| Referential catalyst 2 | 90 | 340 | 12.8 |
| Referential catalyst 3 | 77 | 312 | 24.2 |
| Referential catalyst 4 | 78 | 287 | 15.4 |

Fig. 12 is a graph showing the correlation between the Nd₂O₃ content (mass%) of a carrier and the BET specific surface area or OSC performance shown in Table 6 regarding referential catalysts 1 to 4. As is clear from the graph shown in Fig. 12, when the Nd₂O₃ content of a carrier is 2 to 20 mass%, favorable results are obtained.

Referential catalysts 1, 3, and 4 were thermally treated under the aforementioned conditions (900°C, 24 hours), followed by XRD analysis. Fig. 13 is a chart showing the thus-obtained XRD data. As is clear from the chart shown in Fig. 13, referential catalyst 1 exhibits improved thermal stability (i.e., no phase separation even after thermal treatment) ; referential catalyst 3, which contains no Nd₂O₃, exhibits poor thermal stability (i.e., phase separation after thermal treatment) ; and referential catalyst 4, which contains excess Nd₂O₃ (24 mass%), exhibits poor stability (i.e., phase separation at a high angle after thermal treatment).

Referential catalysts 1 and 5 were subjected to the below-described severe conditions (rich conditions), followed by TPR analysis. Fig. 14 is a chart showing the thus-obtained TPR data. As is clear from the chart shown in Fig. 14, PdO remains in the case of referential catalyst 1, in which the carrier of the first catalyst layer satisfies the requirements of the present invention. In contrast, PdO is lost in the case of referential catalyst 5, in which the carrier of the first catalyst layer does not satisfy the requirements of the present invention.

### Severe conditions:

Engine capacity: 1,300 cc
Fuel: unleaded gasoline
Gas temperature at inlet of catalyst: 730°C
Duration: 32 hours
A/F change: fuel cut: 10 seconds, rich spike (secondary air cut): 40 seconds

## Claims

1. An exhaust gas cleaning catalyst for a saddle-type vehicle, **characterized by** comprising a support formed of a ceramic material or a metallic material; a first catalyst layer formed on a surface of the support; and a second catalyst layer formed on the first catalyst layer, wherein the first catalyst layer includes a carrier formed of a cerium-zirconium composite oxide and a catalyst component which is supported on the carrier ; and the second catalyst layer includes a carrier formed of a zirconium composite oxide and a catalyst component which is supported on the carrier,
**characterized in that** the first catalyst layer includes the carrier formed of a cerium-zirconium composite oxide having a CeO₂ content of 45 to 70 mass%, a ZrO₂ content of 20 to 45 mass%, an Nd₂O₃ content of 2 to 20 mass%, and an La₂O₃ content of 1 to 10 mass%, and the catalyst component containing metallic Pd or Pd oxide; and the second catalyst layer includes the carrier formed of a zirconium composite oxide having a ZrO₂ content of 50 to 95 mass%, a CeO₂ content of 0 to 40 mass%, an Nd₂O₃ content of 2 to 20 mass%, and an La₂O₃ content of 1 to 10 mass%, and the catalyst component containing metallic Rh or Rh oxide, or both metallic Rh or Rh oxide and metallic Pt or Pt oxide.

2. An exhaust gas cleaning catalyst for a saddle-type vehicle according to claim 1, wherein, in the first catalyst layer, the amount of the catalyst component containing metallic Pd or Pd oxide is 0.3 to 5 mass%, as reduced to metallic Pd, on the basis of the mass of the carrier.

3. An exhaust gas cleaning catalyst for a saddle-type vehicle according to claim 1 or 2, wherein, when the catalyst component of the second catalyst layer is formed of metallic Rh or Rh oxide, the ratio by mass of Pd/Rh, as reduced to metal, is 1/1 to 20/1, or when the catalyst component of the second catalyst layer is formed of metallic Rh or Rh oxide and metallic Pt or Pt oxide, the ratio by mass of (Pt + Pd)/Rh, as reduced to metal, is 1/1 to 20/1.

4. An exhaust gas cleaning catalyst for a saddle-type vehicle according to claim 1, 2, or 3, wherein the first catalyst layer includes the carrier and the catalyst component in a total amount of 50 to 80 mass%, a heat-resistant alumina component in an amount of 10 to 40 mass%, and a binder material in a solid amount of 5 to 20 mass%; and the amount of Pd supported on the carrier is 0.7 to 5.5 g, as reduced to metal, on the basis of 1 L of the catalyst.

5. An exhaust gas cleaning catalyst for a saddle-type vehicle according to any one of claims 1 to 4, wherein the second catalyst layer includes the carrier and the catalyst component in a total amount of 50 to 80 mass%, a heat-resistant alumina component in an amount of 10 to 40 mass%, and a binder material in a solid amount of 5 to 20 mass%; and the total amount of Pd, Rh, and Pt supported on the carrier is 0.7 to 6.5 g, as reduced to metal, on the basis of 1 L of the catalyst.

6. An exhaust gas cleaning catalyst for a saddle-type vehicle according to any one of claims 1 to 5, wherein the ratio by mass of the first catalyst layer to the second catalyst layer is 1 to 3 : 1.

7. An exhaust gas cleaning catalyst for a saddle-type vehicle according to any one of claims 1 to 6, which is for use with an engine of a saddle-type vehicle in which average air/fuel ratio (A/F) is 14.5 or less.

## Patentansprüche

1. Abgasreinigungskatalysator für ein Fahrzeug vom Satteltyp, **gekennzeichnet dadurch, dass** er umfasst, einen Körper, der aus einem keramischen Material oder einem metallischen Material ausgebildet ist; eine erste Katalysatorschicht, die auf einer Oberfläche des Körpers ausgebildet ist; und eine zweite Katalysatorschicht, die auf der ersten Katalysatorschicht ausgebildet ist, wobei die erste Katalysatorschicht einen Träger aufweist, der aus einem Cerium-Zirconium-Verbundoxid und einer Katalysatorkomponente ausgebildet ist, welche auf dem Träger getragen wird; und die zweite Katalysatorschicht einen Träger aufweist, der aus einem Zirconium-Verbundoxid und einer Katalysatorkomponente ausgebildet ist, die auf dem Träger getragen wird,
**dadurch gekennzeichnet, dass** die erste Katalysatorschicht einen Träger aufweist, der aus einem Cerium-Zirconium-Verbundoxid mit einem CeO₂-Gehalt von 45 bis 70 Masse-%, einem ZrO₂-Gehalt von 20 bis 45 Masse-%, einem Nd₂O₃-Gehalt von 2 bis 20 Masse-% und einem La₂O₃-Gehalt von 1 bis 10 Masse-% ausgebildet ist, und wobei die Katalysatorkomponente metallisches Pd oder Pd-Oxid enthält; und die zweite Katalysatorschicht den Träger aufweist, der aus einem Zirconium-Verbundoxid mit einem ZrO₂-Gehalt von 50 bis 95 Masse-%, einem CeO₂-Gehalt von 0 bis 40 Masse-%, einem Nd₂O₃-Gehalt von 2 bis 20 Masse-%, und einem La₂O₃-Gehalt von 1 bis 10 Masse-% aufweist, und die Katalysatorkomponente metallisches Rh oder Rh-Oxid oder sowohl metallisches Rh oder Rh-Oxid als auch metallisches Pt oder Pt-Oxid enthält.

2. Abgasreinigungskatalysator für ein Fahrzeug vom Satteltyp nach Anspruch 1, wobei in der ersten Katalysatorschicht die Menge der Katalysatorkomponente, die metallisches Pd oder Pd-Oxid enthält, 0,3 bis 5 Masse-%, wie auf metallisches Pd reduziert, auf der Grundlage der Masse des Trägers beträgt.

3. Abgasreinigungskatalysator für ein Fahrzeug vom Satteltyp nach Anspruch 1 oder 2, wobei, wenn die Katalysatorkomponente der zweiten Katalysatorschicht aus metallischem Rh oder Rh-Oxid ausgebildet ist, das Verhältnis laut Masse von Pd/Rh, wie auf Metall reduziert, 1/1 bis 20/1 beträgt, oder wenn die Katalysatorkomponente der zweiten Katalysatorschicht aus metallischem Rh oder Rh-Oxid und metallischem Pt oder Pt-Oxid ausgebildet ist, das Verhältnis laut Masse von (Pt + Pd)/Rh, wie auf Metall reduziert, 1/1 bis 20/1 beträgt.

4. Abgasreinigungskatalysator für ein Fahrzeug vom Satteltyp nach Anspruch 1, 2 oder 3, wobei die erste Katalysatorschicht den Träger und die Katalysatorkomponente in einer Gesamtmenge von 50 bis 80 Masse-%, eine hitzebeständige Aluminiumoxidkomponente in einer Menge von 10 bis 40 Masse-%, und einem Bindematerial in einer festen Menge von 5 bis 20 Masse-% aufweist; und die Menge an Pd, die auf dem Träger getragen wird, 0,7 bis 5,5 g, wie auf Metall reduziert, auf der Grundlage von 1 L des Katalysators beträgt.

5. Abgasreinigungskatalysator für ein Fahrzeug vom Satteltyp nach irgendeinem der Ansprüche 1 bis 4, wobei die zweite Katalysatorschicht den Träger und die Katalysatorkomponente in einer Gesamtmenge von 50 bis 80 Masse-%, eine hitzebeständige Aluminiumoxidkomponente in einer Menge von 10 bis 40 Masse-%, und ein Bindematerial in einer festen Menge von 5 bis 20 Masse-% aufweist; und die Gesamtmenge an Pd, Rh und Pt, die auf dem Träger getragen wird, 0,7 bis 6,5 g, wie auf Metall reduziert, auf der Grundlage von 1 L des Katalysators beträgt.

6. Abgasreinigungskatalysator für ein Fahrzeug vom Satteltyp nach irgendeinem der Ansprüche 1 bis 5, wobei das Verhältnis laut Masse der ersten Katalysatorschicht zu der zweiten Katalysatorschicht 1 bis 3:1 beträgt.

7. Abgasreinigungskatalysator für ein Fahrzeug vom Satteltyp nach irgendeinem der Ansprüche 1 bis 6, der zur Verwendung in einem Motor eines Fahrzeuges vom Satteltyp vorgesehen ist, bei dem das durchschnittliche Luft-/Kraftstoffverhältnis (A/F) 14,5 oder weniger beträgt.

## Revendications

1. Catalyseur d'épuration de gaz d'échappement pour véhicule du type à selle, **caractérisé en ce qu'**il comporte un substrat en matière céramique ou en matière métallique, une première couche de catalyseur formée sur une surface du substrat et une seconde couche de catalyseur formée sur la première couche de catalyseur, la première couche de catalyseur comprend un support en oxyde composite de cérium et de zirconium et un constituant sous forme de catalyseur porté par le support, et la seconde couche de catalyseur comprend un support en oxyde composite de ziconium et un constituant sous forme de catalyseur porté par le support,
**caractérisé en ce que** la première couche de catalyseur comprend le support en oxyde composite de cérium et de zirconium contenant de 45 à 70 % en poids de CeO₂, de 20 à 45 % en poids de ZrO₂, de 2 à 20 % en poids de Nd₂O₃ et de 1 à 10 % en poids de La₂O₃, et le constituant sous forme de catalyseur contenant du Pd métal ou de l'oxyde de Pd, et la seconde couche de catalyseur comprend le support en oxyde composite de zirconium contenant de 50 à 95 % en poids de ZrO₂, de 0 à 40 % en poids de CeO₂, de 2 à 20 % en poids de Nd₂O₃ et de 1 à 10 % en poids de La₂O₃, et le constituant sous forme de catalyseur contenant du Rh métal ou de l'oxyde de Rh, ou à la fois du Rh métal ou de l'oxyde de Rh et du Pt métal ou de l'oxyde de Pt.

2. Catalyseur d'épuration de gaz d'échappement pour véhicule du type à selle selon la revendication 1, dans lequel, dans la première couche de catalyseur, la quantité du constituant sous forme de catalyseur contenant du Pd métal ou de l'oxyde de Pd est de 0,3 à 5 % en poids, réduit en Pd métal, sur la base du poids du support.

3. Catalyseur d'épuration de gaz d'échappement pour véhicule du type à selle selon la revendication 1 ou 2, dans lequel, si le constituant sous forme de catalyseur de la seconde couche de catalyseur est en Rh métal ou en oxyde de Rh, le rapport en poids de Pd/Rh, réduits en métal, est de 1/1 à 20/1 ou, si le constituant sous forme de catalyseur de la seconde couche de catalyseur est en Rh métal ou en oxyde de Rh et en Pt métal ou en oxyde de Pt, le rapport en poids de (Pt + Pd)/Rh, réduits en métal, est de 1/1 à 20/1.

4. Catalyseur d'épuration de gaz d'échappement pour véhicule du type à selle selon la revendication 1, 2 ou 3, dans lequel la première couche de catalyseur comprend le support et le constituant sous forme de catalyseur à raison d'un total de 50 à 80 % en poids, un constituant sous forme d'alumine réfractaire à raison de 10 à 40 % en poids et un liant contenant de 5 à 20 % de solides, et la quantité de Pd, réduit en métal, portée par le support est de 0,7 à 5,5 g sur la base de 1 L du catalyseur.

5. Catalyseur d'épuration de gaz d'échappement pour véhicule du type à selle selon l'une quelconque des revendications 1 à 4, dans lequel la seconde couche de catalyseur comprend le support et le constituant sous forme de catalyseur à raison d'un total de 50 à 80 % en poids, un constituant sous forme d'alumine réfractaire à raison de 10 à 40 % en poids et un liant contenant de 5 à 20 % de solides, et la quantité totale de Pd, Rh et Pt, réduits en métal, portée par le support est de 0,7 à 6,5 g sur la base de 1 L du catalyseur.

6. Catalyseur d'épuration de gaz d'échappement pour véhicule du type à selle selon l'une quelconque des revendications 1 à 5, dans lequel le rapport en poids de la première couche de catalyseur ou la seconde couche de catalyseur est de 1 à 3/1.

7. Catalyseur d'épuration de gaz d'échappement pour véhicule du type à selle selon l'une quelconque des revendications 1 à 6, destiné à servir avec un moteur d'un véhicule du type à selle dans lequel le rapport air/carburant moyen (A/F) est égal ou inférieur à 14,5.
